# EUROPEAN PATENT APPLICATION

(11) **EP 3 903 592 A1**
(43) Date of publication of application: **03.11.2021**
(21) Application number: 19901809.4
(22) Date of filing: 23.12.2019
(51) Int. Cl.: A23C 21/06, A23J 3/08, A23L 5/00

(54) **METHOD FOR PRODUCING GRANULATED POWDER AND GRANULATED POWDER**

(30) Priority: 28.12.2018 JP 2018246472
(71) Applicant: Morinaga Milk Industry Co., Ltd., Minato-ku Tokyo 108-8384 (JP)
(72) Inventor: YAMAMOTO Keisuke, Zama-shi, Kanagawa 252-8583 (JP); YANO Masayasu, Zama-shi, Kanagawa 252-8583 (JP)
(74) Representative: Vossius & Partner Patentanwälte Rechtsanwälte mbB
(86) International application number: PCT/JP2019/050250
(87) International publication number: WO 2020/137932

(57) **Abstract**

A method for producing a granulated powder according to an aspect of the present invention comprises spraying a binder liquid on a whey protein concentrate to perform granulation, and producing a granulated powder, the binder liquid containing a whey-derived lipid.

## Description

### Technical Field

The present invention relates to a method for producing a granulated powder and a granulated powder.

The present application claims priority to Japanese Patent Application No. 2018-246472 filed on December 28, 2018 in Japan, the content of which is incorporated herein.

### Background Art

Protein-containing powder is used for nutritional supplements and the like. Protein-containing powder is mixed with and dissolved in water using, for example, a shaker and is taken as drink.

As a protein source of protein-containing powder, whey protein is often used.

A known raw material that contains whey protein is a whey protein concentrate (hereinafter also denoted as "WPC"). WPC is produced by powderizing a retentate (a concentrated fraction of whey protein) obtained by subjecting whey to an ultrafiltration membrane treatment.

When WPC is mixed with and dissolved in water as it is, excessive foaming occurs. Such excessive forming is not preferred for drink.

As a technique for suppressing foaming, a method with a silicone-based defoaming agent for food is widely utilized. In addition, use of an emulsifier, such as lecithin, as a defoaming agent is also reported (PTL 1).

### Citation List

### Patent Literature

PTL 1: Japanese Patent No. 4827987

### Summary of Invention

### Technical Problem

Silicone-based defoaming agents are a component that is not originally contained in whey. The use of such a component is not desirable from the viewpoint of producing food with additives as less as possible in consideration for health-conscious consumers. Lecithin has problems of poor workability due to its high viscosity and of unfavorable flavor.

An aspect of the present invention has an object to provide a granulated powder that is less likely to foam in mixing with water without any component that is not originally contained in whey and a method for producing such a granulated powder.

### Solution to Problem

[1] A method for producing a granulated powder comprising spraying a binder liquid on a whey protein concentrate to perform granulation, and producing a granulated powder,
   wherein the binder liquid containing a whey-derived lipid.
[2] The method for producing a granulated powder according to [1], wherein the whey-derived lipid is a cheese whey-derived lipid.
[3] The method for producing a granulated powder according to [1] or [2], wherein the binder liquid contains a microfiltration retentate or an ultrafiltration retentate of a whey.
[4] The method for producing a granulated powder according to any one of [1] to [3], wherein the binder liquid contains a microfiltration retentate of a whey.
[5] The method for producing a granulated powder according to [4], wherein the microfiltration retentate is produced in production of a whey protein isolate.
[6] The method for producing a granulated powder according to any one of [1] to [5], wherein the binder liquid contains no additive.
[7] A granulated powder of a whey protein concentrate comprising a whey protein and a lipid,
   wherein a content of the lipid based on the total mass of the granulated powder is 0.5% by mass or more and less than 10% by mass, and
   a volume-based cumulative 50% diameter is 60 µm or more.
[8] The granulated powder according to [7], wherein a content of the whey protein based on the total mass of the granulated powder is 50 to 95% by mass.
[9] The granulated powder according to [7] or [8], which contains no additive.
[10] The granulated powder according to any one of [7] to [9], which has an avalanche angle of 40 to 60°.
[11] The granulated powder according to any one of [7] to [10], which has an avalanche energy of 10 to 50 mJ/kg.
[12] The granulated powder according to any one of [7] to [11], which has an increment in volume in an evaluation of foaming of 3 times or less.

### Advantageous Effects of Invention

According to the method for producing a granulated powder of the present invention, a granulated powder that is less likely to foam in mixing with water can be produced without any component that is not originally contained in milk nor in WPC.

The granulated powder of the present invention is less likely to foam in mixing with water without any component that is not originally contained in milk nor in WPC.

### Description of Embodiments

Definitions of the following terms apply to the Description and Claims.

Additive is a component that is not originally contained in whey.

Lipid content is a value measured by a Rose Gottlieb method.

Whey protein content is a value obtained by multiplying a numerical value representing a nitrogen content measured by a combustion method by a factor 6.38.

Solid content is a value calculated by "solid content (% by mass) = 100 - water content (% by mass)". Water content is a value measured by a normal pressure heat drying method. Specifically, a sample is dried in a thermostat of 99°C for 4 hours and then the decrement ((mass of sample before drying (g) - mass of sample after drying (g))/ mass of sample before drying (g) × 100) is taken as the water content (% by mass).

Cheese whey is a whey obtained in a cheese production process.

Volume-based cumulative 50% diameter (hereinafter also denoted as "D50") is a particle diameter at a point giving a cumulative volume of 50% in a cumulative volume distribution curve which is obtained by measuring particle diameters with a laser diffraction/scattering particle size distribution analyzer.

Volume-based cumulative 90% diameter (hereinafter also denoted as "D90") is a particle diameter at a point giving a cumulative volume of 90% in a cumulative volume distribution curve which is obtained by measuring particle diameters with a laser diffraction/scattering particle size distribution analyzer.

Volume-based cumulative 10% diameter (hereinafter also denoted as "D10") is a particle diameter at a point giving a cumulative volume of 10% in a cumulative volume distribution curve which is obtained by measuring particle diameters with a laser diffraction/scattering particle size distribution analyzer.

Sauter mean diameter (hereinafter also denoted as "D[3,2]") refers to a mean particle diameter weighted with the surface area (surface area moment mean). D[3,2] is measured using a laser diffraction/scattering particle size distribution analyzer.

De Brouckere mean particle diameter (hereinafter also denoted as "D[4,3]") refers to a mean particle diameter weighted with the volume (volume moment mean). D[4,3] is measured using a laser diffraction/scattering particle size distribution analyzer.

Repose angle is an angle relative to a horizontal plane of an inclined plane on which a powder dropped from a certain height remains stable without collapse. A specific measurement procedure will be described in Examples later.

Collapse angle is an angle at which the powder collapses when a certain impact is applied at a repose angle. A specific measurement procedure will be described in Examples later.

Angle difference is a value obtained by subtracting the collapse angle from the repose angle.

Avalanche energy, avalanche angle, and surface fractal are values measured using a rotating drum and image analysis system powder flowability analyzer. A specific measurement procedure will be described in Examples later.

### <Method for producing granulated powder>

The method for producing a granulated powder of the present invention includes a step (granulation step) of spraying a binder liquid on WPC to perform granulation, thus producing a granulated powder.

### (Binder liquid)

The binder liquid contains a whey-derived lipid.

The "whey-derived lipid" in the binder liquid is the same as a lipid of a whey. "Whey" refers to a transparent liquid part remaining after removal of a coagulated solid (casein and the like) in a process of producing cheese, casein, sodium caseinate, yogurt, and the like using milk as a raw material. Whey contains a whey protein, a lipid, lactose, a mineral (ash), water, and the like.

Examples of the whey that is a lipid source of the binder liquid include a cheese whey and an acid whey. The raw material milk of the whey is preferably a milk of a mammal, such as cow, sheep, or goat, and particularly preferably a milk of cow. These kinds of the whey may be used alone or two or more thereof may be used in combination.

As the whey, a cheese whey is preferred in terms of flavor and production suitability. That is, as the whey-derived lipid, a cheese whey-derived lipid is preferred. In a cheese production process, for example, a raw material milk is subjected to lactic fermentation, a milk-coagulating enzyme (rennet) is added thereto to form curd, and the curd is taken out. A liquid part remaining after taking the curd is a cheese whey.

The whey-derived lipid typically contains a phospholipid and a neutral fat. The whey-derived lipid further contains a minor amount of a glycolipid.

Examples of the phospholipid include phosphatidylcholine (PC), phosphatidylethanolamine (PE), phosphatidylinositol (PI), phosphatidylserine (PS), phosphatidylglycerol (PG), phosphatidic acid (PA), lysophosphatidylcholine (LPC), lysophosphatidylethanolamine (LPE), and sphingomyelin (SM).

The proportion of the phospholipid based on the total mass of the whey-derived lipid is, for example, 10 to 40% by mass, and in another example, is 10 to 25% by mass. The proportion of the neutral fat based on the total mass of the whey-derived lipid is, for example, 50 to 85% by mass. Here, the sum of the proportion of the phospholipid and the proportion of the neutral fat does not exceed 100% by mass based on the total mass of the whey-derived lipid.

The composition of the phospholipid in the whey-derived lipid is, for example, based on the total mass of the phospholipid, 20 to 35% by mass of PC, 20 to 35% by mass of PE, 3 to 8% by mass of PI, 5 to 15% by mass of PS, 0 to 5% by mass of PG, 0 to 5% by mass of PA, 0 to 5% by mass of LPC, 0 to 5% by mass of LPE, and 20 to 30% by mass of SM. Here, the sum of PC, PE, PI, PS, PG, PA, LPC, LPE, and SM does not exceed 100% by mass based on the total mass of the phospholipid.

The content of the whey-derived lipid in the binder liquid based on the total mass of the solid in the binder liquid is preferably 6% by mass or more, more preferably 9% by mass or more, and further preferably 12% by mass or more. When the content of the whey-derived lipid is the lower limit or more, the foaming suppression effect is more superior.

The content of the whey-derived lipid in the binder liquid based on the total mass of the solid in the binder liquid is preferably 60% by mass or less, more preferably 30% by mass or less, further preferably 20% by mass or less, and particularly preferably 15% by mass or less. When the content of the whey-derived lipid is the upper limit or less, the dispersibility into the binder liquid and the operation suitability are superior.

For example, the content of the whey-derived lipid in the binder liquid based on the total mass of the solid in the binder liquid may be 6 to 60% by mass, may be 9 to 30% by mass, may be 12 to 20% by mass, or may be 12 to 15% by mass.

The binder liquid typically contains water.

The water content is selected according to the desired solid concentration of the binder liquid.

The water content based on the total mass of the binder liquid is preferably 70 to 99.5% by mass, and more preferably 75 to 99.5% by mass.

The solid concentration of the binder liquid based on the total mass of the binder liquid is preferably 0.5 to 30% by mass, and more preferably 0.5 to 25% by mass. When the solid concentration of the binder liquid is the lower limit of the above range or more, the amount of the binder liquid that can be used for adding a predetermined amount of the solid can be reduced in the case where there is a limitation in the binder liquid-derived solid that can be added in the granulation step. As a result, reductions in the process time and in the time and energy for drying water can be achieved. When the solid concentration of the binder liquid is the upper limit of the above range or less, the viscosity of the binder liquid is decreased and the operation suitability in sterilization or the like is superior. In addition, in the case where there is a limitation in the binder liquid-derived solid that can be added in the granulation step, the amount of the binder liquid that can be used for adding a predetermined amount of the solid is increased. As a result, the solubility of the resulting granulated powder is superior.

The binder liquid may further contain a whey protein, lactose, a mineral, or other milk-derived components.

For example, the total content of the whey protein, lactose, mineral, and other milk-derived components based on the total mass of the solid in the binder liquid may be 40 to 94% by mass, may be 70 to 91% by mass, may be 80 to 88% by mass, or may be 85 to 88% by mass. Here, the sum of the whey-derived lipid, whey protein, lactose, mineral, and other milk-derived components does not exceed 100% by mass based on the total mass of the solid in the binder liquid.

The binder liquid preferably contains no additive out of consideration for the health-conscious consumers.

An example of the additive is an emulsifier having a defoaming effect. Examples of the emulsifier include a silicone-based defoaming agent, a lecithin that is not derived from whey, and a glycerol ester.

The binder liquid typically contains a raw material containing a whey-derived lipid. A powdery raw material may be dissolved in water to make a binder liquid.

Examples of the raw material containing a whey-derived lipid include a microfiltration retentate of a whey, an ultrafiltration retentate of a whey, WPC that has a lipid content larger than that in the WPC to be granulated, and a whey cream.

Hereinafter, microfiltration membrane is also denoted as MF, and ultrafiltration membrane is also denoted as UF.

The raw material containing a whey-derived lipid is preferably an MF retentate or a UF retentate of a whey in terms of the relatively higher content of the lipid.

A whey contains a whey protein, a lipid (fat globule), lactose, a mineral (calcium, sodium, etc.), water, and the like. MF generally does not permeate lipids and permeates whey proteins, lactose, minerals, and water. Thus, when a whey is treated with MF, a retentate having a lipid concentrated can be obtained. UF generally does not permeate whey proteins and lipids, and permeates lactose, minerals, and water. Thus, when a whey is treated with UF, a retentate having a whey protein and a lipid concentrated can be obtained.

The MF retentate and the UF retentate of a whey typically have the following compositions, respectively. The ratio of each component is a ratio based on the total mass of the solid.

MF retentate of a whey: 6 to 30% by mass of a lipid (2 to 15% by mass of a phospholipid), 10 to 80% by mass of a whey protein.

UF retentate of a whey: 1 to 20% by mass of a lipid (0.25 to 8% by mass of a phospholipid), 10 to 80% by mass of a whey protein.

The solid concentration of the MF retentate of a whey is typically 2 to 30% by mass based on the total mass of the MF retentate. The solid concentration of the UF retentate of a whey is typically 2 to 30% by mass based on the total mass of the UF retentate.

The MF retentate or the UF retentate of a whey can be prepared by treating the whey with MF or UF.

The pore size of MF is, for example, 0.01 µm to 1 µm, preferably 0.02 µm to 0.6 µm, more preferably 0.05 µm to 0.2 µm, and further preferably 0.1 µm to 0.2 µm.

The pore size of UF is, for example, 100 nm or less, preferably 1 to 100 nm, and more preferably 1 to 10 nm.

The whey may be sterilized before the treatment with MF or UF. As the sterilization method, an ordinary heat treatment method can be used. The heating temperature and retention time in the heat treatment may be appropriately set to conditions for enabling sufficient sterilization. For example, a whey can be sterilized by a heat treatment at 70 to 140°C for 2 seconds to 30 minutes. The heat sterilization can be achieved by a batch system or a continuous system. In a continuous system, any system, such as a plate heat exchange system, an infusion system, or an injection system, can be used.

The MF retentate or the UF retentate of a whey can be used as a binder liquid as it is or after diluted in water or concentrated, as required.

The binder liquid may be constituted of any one or more of a MF retentate of a whey, a dilution and concentrate thereof, a UF retentate of a whey, and a dilution and concentrate thereof. A preferred solid concentration of the binder liquid is the same as described above.

As a raw material containing a whey-derived lipid, a microfiltration retentate produced in production of a whey protein isolate (hereinafter also denoted as "WPI") is preferred.

WPI is produced by treating a whey with MF, treating the resulting permeate with UF, and drying the resulting retentate. Conventionally, an MF retentate of a whey produced in production of WPI has been partially used for livestock feed, but has been disposed in many cases. The use of the MF retentate in the binder liquid contributes to reduction in loads on the environment due to the disposal.

WPC and WPI typically have the following respective compositions. The content of each component (% by mass) is a ratio based on the total mass of each of WPC and WPI.

WPC: 3 to 8% by mass of a lipid (1.2 to 3.2% by mass of a phospholipid), 34 to 88% by mass of a protein.

WPI: 0.1 to 1% by mass of a lipid (0.03 to 0.3% by mass of a phospholipid), 88 to 95% by mass of a protein.

### (WPC)

As the WPC, commercially available one may be used or one produced by a known method may be used.

WPC can be produced, for example, by drying a UF retentate of a whey.

Examples of the UF retentate of a whey include the same ones as described above.

As a drying method, a known drying method, such as a spray drying method, can be appropriately used. The drying temperature is, for example, 150 to 200°C.

The D50 of WPC is, for example, 30 to 55 µm.

The D90 of WPC is, for example, 70 to 105 µm.

The D10 of WPC is, for example, 10 to 20 µm.

### (Granulation step)

In the granulation step, the binder liquid is sprayed on WPC to perform granulation.

As the granulation method, a known granulation method, such as a fluidized-bed granulation method, agitation granulation, or tumbling granulation, can be used, and a fluidized-bed granulation method is preferred in that a granulated powder having better solubility in water can be obtained.

A fluidized-bed granulation method can be performed using a known fluidized-bed granulation apparatus.

In a fluidized-bed granulation apparatus, a fluid, such as air, is blown up from the bottom of the apparatus to allow solid particles (WPC) to float (flow), and a binder liquid is sprayed thereon to perform granulation, followed by drying. As a fluidized-bed granulation apparatus, a commercially available fluidized-bed granulator can be used. Generally well known examples include a continuous fluidized-bed granulation apparatus in which a fluidized-bed granulator is joined with a spray-drying apparatus to perform granulation continuously and a batch-type fluidized-bed granulation apparatus in which powder is refilled for each batch to perform granulation.

The amount of the binder liquid sprayed may be set in view of the solid concentration of the binder liquid, the content of the whey-derived lipid in the binder liquid, desired characteristics (the lipid content, D50, solubility in water) of the granulated powder to be produced, and the like.

For example, when the solid concentration of the binder liquid is 0.5 to 30% by mass based on the total mass of the binder liquid and the content of the whey-derived lipid is 6 to 60% by mass based on the total mass of the solid in the binder liquid, the amount of the binder liquid sprayed is preferably 0.1 to 2 L/kg, and more preferably 0.2 to 1 L/kg as the volume of the binder liquid per unit mass of WPC. When the amount of the binder liquid sprayed is the lower limit or more, the granulation property of the particles is increased and a powder superior in flowability and solubility in water can be obtained. When the amount of the binder liquid sprayed is the upper limit or less, reduction in the production time and reduction in the cost of energy, such as quantity of heat for drying, can be expected.

A preferred drying condition is a condition at 60 to 95°C for 1 to 60 minutes.

Characteristics of a granulated powder obtained by the granulation step may be, for example, the same as the characteristics of the granulated powder of the present invention described later.

The ratio of the D50 (µm) of the granulated powder to the D50 (µm) of WPC is preferably 150 to 650%, and more preferably 150 to 500%. When the ratio of the D50 (µm) of the granulated powder to the D50 (µm) of WPC is the lower limit or more, it is expected that the foaming suppression effect is more superior and sufficient granulation is achieved to provide better solubility and flowability. When the ratio of the D50 (µm) of the granulated powder to the D50 (µm) of WPC is the upper limit of the above range or less, the powder is not bulky to provide more superior packaging ability and transportability. The ratio can be adjusted by the amount of the binder liquid sprayed, speed of spraying, hot air temperature, amount of hot air, or the like.

The ratio of the lipid content (% by mass) of the granulated powder to the lipid content (% by mass) of WPC is preferably 100.5 to 130% by mass, and more preferably 103 to 110% by mass. The lipid of the granulated powder is constituted of a lipid in WPC and a lipid in the binder liquid. When the ratio of the lipid content of the granulated powder to the lipid content of WPC is the lower limit of the above range or more, the foaming suppression effect is more superior. When the ratio of the lipid content of the granulated powder to the lipid content of WPC is the upper limit of the above range or less, a high protein content can be retained to provide more superior suitability to a nutritional food. The ratio can be adjusted by the amount of the binder liquid sprayed.

After the granulation step, a cooling step, a classification step, or the like can be performed, as required.

### <Granulated powder>

The granulated powder of the present invention (hereinafter also referred to as "the present granulated powder") is a granulated powder of WPC.

The present granulated powder, which is a granulated powder of WPC, contains a whey protein and a lipid.

The content of the whey protein in the present granulated powder based on the total mass of the present granulated powder is preferably 50 to 95% by mass, and more preferably 60 to 90% by mass. When the content of the whey protein is the lower limit of the above range or more, the present granulated powder is highly usable as a nutritional supplement. When the content of the whey protein is the upper limit of the above range or less, a lipid can be sufficiently contained and foaming is less likely to occur in mixing with and dissolving in water.

The content of the lipid in the present granulated powder based on the total mass of the present granulated powder is 0.5% by mass or more and less than 10% by mass, preferably 3 to 8% by mass, and more preferably 4.5 to 7% by mass. When the content of the lipid is the lower limit of the above range or more, foaming is less likely to occur in mixing with and dissolving in water. When the content of the lipid is the upper limit of the above range or less, the whey protein can be sufficiently contained and the present granulated powder is highly usable as a nutritional supplement.

The proportion of the total mass of the whey protein and the lipid based on the total mass of the present granulated powder is, for example, 50 to 97% by mass.

In addition to the whey protein and the lipid, the present granulated powder may further contain a mineral, lactose, water, other milk-derived minor components, or the like.

The water content based on the total mass of the present granulated powder is, for example, 1 to 10% by mass. The total content of the mineral, lactose, and other milk-derived minor components based on the total mass of the present granulated powder is, for example, 2 to 49% by mass. Here, the sum of the whey protein, lipid, water, mineral, lactose, and other milk-derived minor components does not exceed 100% by mass based on the total mass of the present granulated powder.

The present granulated powder preferably contains no additive out of consideration for the health-conscious consumers.

Examples of additives include ones listed above.

The D50 of the present granulated powder is 60 µm or more, and more preferably 62 µm or more. When the D50 is the lower limit or more, particles of the granulated powder are formed more, leading to superior solubility in water.

The D50 of the present granulated powder is preferably 250 µm or less, more preferably 200 µm or less, further preferably 160 µm or less, and particularly preferably 120 µm or less. When the D50 is the upper limit or less, the present granulated powder is more superior in the rate of dissolution into water, the packaging ability, and the transportability.

For example, the D50 of the present granulated powder may be 60 to 250 µm, may be 60 to 200 µm, may be 60 to 160 µm, may be 60 to 120 µm, or may be 62 to 120 µm.

The D90 of the present granulated powder is preferably 110 to 400 µm, and more preferably 150 to 350 µm.

The D10 of the present granulated powder is preferably 20 to 50 µm, and more preferably 20 to 45 µm.

When the D90 or D10 is the lower limit of the above range or more, the powder is granulated enough, and the powder is superior in flowability and solubility in water. When the D90 or D10 is the upper limit of the above range or less, the powder is not bulky, leading to superior packaging ability and transportability.

The D[3,2] of the present granulated powder is preferably 30 to 90 µm, and more preferably 45 to 80 µm. The D[4,3] of the present granulated powder is preferably 60 to 200 µm, and more preferably 65 to 180 µm.

The repose angle of the present granulated powder is preferably 35 to 55°, and more preferably 40 to 50°.

The collapse angle of the present granulated powder is preferably 25 to 50°, and more preferably 30 to 45°.

When the repose angle or collapse angle is the upper limit of the above range or less, the powder is superior in flowability and the powder is considered to be granulated enough.

The angle difference of the present granulated powder is preferably 5 to 15°, and more preferably 10 to 15°.

The avalanche energy of the present granulated powder is preferably 10 to 50 mJ/kg, and more preferably 15 to 50 mJ/kg.

The avalanche angle of the present granulated powder is preferably 40 to 60°, and more preferably 45 to 55°.

The surface fractal of the present granulated powder is preferably 1 to 7, and more preferably 1.5 to 6.

When the avalanche energy, the avalanche angle, or the surface fractal is the upper limit of the above range or less, the powder is more superior in the flowability.

In an aspect of the present granulated powder, the present granulated powder has a D50 of 60 µm or more and an avalanche angle of 40 to 60°.

In another aspect of the present granulated powder, the present granulated powder has a D50 of 60 µm or more, an avalanche energy of 10 to 50 mJ/kg, and an avalanche angle of 40 to 60°.

The present granulated powder preferably has an increment in volume in an evaluation of foaming of 3 times or less, more preferably 2 times or less, further preferably 1.75 times or less, and particularly preferably 1.55 times or less, and may be 1.5 times or less. The lower limit of the increment in volume in an evaluation of foaming is not particularly limited, and may be 1.0 times or more or may be 1.1 times or more.

The increment in volume in an evaluation of foaming may be 1.0 to 3 times, may be 1.0 to 2 times, may be 1.2 to 1.75 times, or may be 1.2 to 1.55 times.

Here, the increment in volume in an evaluation of foaming is measured as follows. As described in Examples later, under a condition of 25°C, 20 g of a granulated powder and 180 g of water are put in a shaker having a volume of 500 mL and are shaken 20 times, then the liquid in the shaker is put into a 500 mL graduated cylinder to measure the volume V₀ (mL), and the increment is calculated by the formula: increment (times) = [V₀]/[volume of solution before foaming test]. V₀ is the volume of the solution including foam after the foaming test. The [volume of solution before foaming test] is a value calculated by dividing the mass (g) of a solution in which 20 g of the granulated powder is dissolved in 180 g of water by the specific gravity (mL/g) of the solution. When the specific gravity of the solution (actual measurement value) 1.008 is taken as the specific gravity of the solution in which 20 g of the granulated powder is dissolved in 180 g of water, the volume before the test is 198 mL (= 200 (g)/1.008 (mL/g)). The specific gravity of the solution is a value at a normal temperature (25°C). The specific gravity of the solution is preferably a value measured using a known gravimeter by an ordinary method.

The present granulated powder can be produced, for example, by the method for producing a granulated powder of the present invention as described above.

In the method for producing a granulated powder of the present invention, the powder characteristics (D50, D90, D10, D[3,2], D[4,3], repose angle, collapse angle, angle difference, avalanche energy, surface fractal, avalanche angle) of the obtained granulated powder can be adjusted by conditions of the granulation step. For example, when the amount of the binder is increased or the hot air temperature is decreased, the D50 tends to increase and the surface fractal and the avalanche angle tend to decrease.

### Examples

The present invention will be described in more detail below with reference to examples. However, the present invention is not to be limited to the examples. Note that the percentages in the examples are by mass unless otherwise specified.

### <Measurement method>

### (Content of whey protein)

A content of a whey protein was determined by multiplying a value representing an amount of nitrogen obtained by a combustion method by a factor 6.38.

### (Lipid content)

A lipid content was measured by a Rose Gottlieb method.

### (Composition of phospholipid)

A composition of a phospholipid was measured by a thin layer chromatography method or a nuclear magnetic resonance (NMR) measurement method.

### (Ash content)

An ash content was measured by a direct ashing method.

### (Carbohydrate content)

A carbohydrate content was calculated by "100 - water content - protein content - lipid content - ash content".

### (Solid content)

The solid content was calculated by "solid content (%) = 100 - water content (%)".

The water content (%) was measured by a normal pressure heat drying method. Specifically, a decrement after drying in a thermostat of 99°C for 4 hours was taken as the water content.

### (D50, D90, D10, D[3,2], D[4,3])

D50, D90, D10, D[3,2], and D[4,3] were measured using a laser diffraction/scattering particle size distribution analyzer ("Mastersizer 3000" manufactured by Malvern Panalytical, Ltd.) under conditions at 25°C and a relative humidity of 40 to 55%.

### (Repose angle, collapse angle, angle difference)

The repose angle and the collapse angle were measured using a powder tester (model: PT-X, manufactured by Hosokawa Micron Corporation) under conditions at 25°C and a relative humidity of 40 to 55% according to the following procedure.

While vibrating a test hopper with a vibration width set to 1 mm, a powder was allowed to pass through a mesh with an opening of 1.7 mm, a guide funnel, a nozzle (inner diameter 7 mm) and to drop from a height of 10.5 cm onto a disk on a sample stage for repose angle to form a powder mountain thereon. The angle of the powder mountain formed under the above conditions which was determined as a result of an image analysis by a powder tester PT-X was expressed as a measurement value. The collapse angle was obtained as follows: according to a program of the powder tester PT-X, while a weight of 109.7 g was naturally dropped from a height of 160 mm to apply an impact, an image analysis on the angle of the powder mountain was performed to calculate a measurement value.

The angle difference is calculated by "angle difference = repose angle - collapse angle".

### (Avalanche energy, avalanche angle, surface fractal)

The avalanche energy, the avalanche angle, and the surface fractal were measured using a rotating drum and image analysis type powder flowability analyzer ("revolution powder analyzer" manufactured by Mercury Scientific Inc.) under conditions at 25°C and a relative humidity of 40 to 55% according to the following procedure.

A sample 100 mL was measured into a drum, then the drum was set into the apparatus and was gently rotated at a speed of 0.3 rpm, and the powder behavior during the rotation was recorded with a CCD camera attached to the apparatus. Images before and after avalanche occurred were taken and analyzed, and various parameters were calculated based on the data. The avalanche energy, the avalanche angle, and the surface fractal were respectively determined using the variation in the potential energy before and after the avalanche, the angle when the avalanche occurred, and the roughness of powder surface after the avalanche as the respective indices.

### <Raw materials>

WPC: Milei 80 manufactured by Milei GmbH. The composition thereof is shown in Table 1.

MF retentate of whey: MF retentate obtained by treating a cheese whey with a microfiltration membrane having a pore size of 0.2 µm was powderized by spray drying. The composition thereof is shown in Table 1.

In Table 1, the raw material composition indicates the proportion by mass of each component based on the total mass of the raw materials, and the phospholipid composition indicates the proportion by mass of each phospholipid based on the total mass of the phospholipids.

Purified sunflower lecithin: Emurpur SF, manufactured by Cargill, Inc.

Lecithin: sunflower-derived lecithin, Topcithin SF, manufactured by Cargill, Inc.

**[Table 1]**

| | | WPC | MF retentate |
|---|---|---|---|
| Raw material composition [%] | Protein | 78 | 71 |
| | Lipid (phospholipid) | 5 (2) | 15 (7) |
| | Ash | 5 | 3 |
| | Water | 4 | 4 |
| | Carbohydrate | 8 | 7 |
| | Total | 100 | 100 |
| Phospholipid composition [%] | PC | 28.8 | 25 |
| | PE | 28.4 | 27 |
| | PI | 7.4 | 8 |
| | PS | 10.5 | 11 |
| | PG | 0 | 3 |
| | PA | 0.4 | 0 |
| | LPC | 0.4 | 3 |
| | LPE | 0.4 | 1 |
| | SM | 23.6 | 22 |

### <Preparation of binder liquid>

The raw material shown in Table 2 were dissolved in water so as to give the concentration shown in Table 2 to prepare binder liquids 1 to 4. The contents of the lipid, protein, ash, carbohydrate in each binder liquid are shown in Table 2. Note that, for the binder liquids 3 and 4, calculated values (expected values) determined based on the values of acetone insoluble were shown. The balance in each binder liquid is water.

**[Table 2]**

| | | Binder liquid | | | |
|---|---|---|---|---|---|
| | | 1 | 2 | 3 | 4 |
| Raw material | | WP C | MF retentate | Purified sunflower lecithin | Lecithin |
| Concentration of raw material | | 5 | 5 | 5 | 5 |
| Content [%] | Protein | 3.9 | 3.55 | <0.5 | <0.5 |
| | Lipid (phospholipid) | 0.25 (0.1) | 0.75 (0.35) | 4.85 (3.5) | 4.85 (2.35) |
| | Ash | 0.25 | 0.15 | | |
| | Carbohydrate | 0.4 | 0.35 | | |
| Phospholipid composition [%] | PC | 0.033 | 0.083 | 1.275 | 0.850 |
| | PE | 0.033 | 0.091 | 0.525 | 0.350 |
| | PI | 0.009 | 0.026 | 1.061 | 0.707 |
| | PS | 0.012 | 0.038 | 0.033 | 0.022 |
| | PG | 0.000 | 0.011 | 0.000 | 0.000 |
| | PA | 0.001 | 0.000 | 0.100 | 0.067 |
| | LPC | 0.001 | 0.009 | 0.085 | 0.057 |
| | LPE | 0.001 | 0.005 | 0.095 | 0.063 |
| | SM | 0.027 | 0.075 | 0.000 | 0.000 |

### <Example 1, Comparative Example 1, Reference Examples A and B>

Using each binder liquid, WPC was granulated according to the following procedure. The granulated powders granulated using the binder liquids 1 to 4 were taken as Comparative Example 1, Example 1, Reference Example A, and Reference Example B, respectively. WPC 600 g was put into a fluidized-bed granulator (manufactured by Okawara MFG, Co., Ltd.), granulation was performed using the binder liquids shown in Table 3 at a spraying rate of the binder liquid of 40 g/minute with blown hot air of 60°C with several times of intermediate drying, followed by drying under conditions with blown hot air of 85°C for 15 minutes, thereby producing a granulated powder. The amounts of the binder liquids sprayed were set so that the amounts of the binder-derived lipid were almost the same. Specifically, the amount sprayed was 500 g in Example 1 and Comparative Example 1, and was 120 g in Reference Examples A and B.

The contents of the protein and the lipid and the phospholipid compositions in the obtained granulated powders are shown in Table 3. In Table 3, the contents of the protein and the lipid represent the proportions by mass of the respective components based on the total mass of the raw material, and the phospholipid composition represents the proportion by mass of each phospholipid based on the total mass of the lipid.

The powder characteristics of the granulated powder in each example are shown in Table 4.

The granulated powder of each example was subjected to the following evaluations. The results are shown in Table 4.

### (Evaluation of solubility)

Under a condition of 25°C, 20 g of a granulated powder and 180 g of water were put into a shaker having a volume of 500 mL and were shaken 20 times. Then, the presence of any granulated powder remaining after dissolution was visually checked and the solubility was evaluated under the following criteria.
A: There was no granulated powder remaining after dissolution.
B: There was some granulated powder remaining after dissolution.

### (Evaluation of foaming)

Immediately after the 20-time shaking in the evaluation of solubility, the liquid in the shaker was put into a 500 mL graduated cylinder to measure the volume V₀ (mL). The increment was calculated by [V₀]/[volume of solution before test]. The less the increment, the more suppressed the foaming.

**[Table 3]**

| | | Example 1 | Comparative Example 1 | Reference Example A | Reference Example B |
|---|---|---|---|---|---|
| Binder liquid | Type | 2 | 1 | 3 | 4 |
| | Raw material | MF retentate | WPC | Purified sunflower lecithin | Lecithin |
| | Amount [g] | 500 | 500 | 120 | 120 |
| Granulated powder | Protein [%] | 77.7 | 78 | 77.7 | 77.7 |
| | Lipid [%] (phospholipid [%]) | 5.5 (2.5) | 5 (2.2) | 5.9 (2.9) | 5.9 (2.6) |
| Phospholipid Composition [%] | PC | 0.71 | 0.66 | 0.91 | 0.82 |
| | PE | 0.71 | 0.65 | 0.75 | 0.71 |
| | PI | 0.19 | 0.17 | 0.38 | 0.31 |
| | PS | 0.26 | 0.24 | 0.24 | 0.24 |
| | PG | 0.01 | 0 | 0.00 | 0.00 |
| | PA | 0.01 | 0.01 | 0.03 | 0.02 |
| | LPC | 0.02 | 0.01 | 0.03 | 0.02 |
| | LPE | 0.01 | 0.01 | 0.03 | 0.02 |
| | SM | 0.59 | 0.54 | 0.53 | 0.53 |

**[Table 4]**

| | | WPC (non-granulated) | Example 1 | Comparative Example 1 | Reference Example A | Reference Example B |
|---|---|---|---|---|---|---|
| Powder characteristics | D10 [µm] | 15 | 41 | 40 | 29 | 27 |
| | D50 [µm] | 40 | 104 | 100 | 72 | 60 |
| | D90 [µm] | 100 | 217 | 210 | 155 | 115 |
| | D[3,2] [µm] | 18 | 73 | 70 | 54 | 47 |
| | D[4,3] [µm] | 50 | 125 | 137 | 89 | 67 |
| | Repose angle [°] | 48.9 | 42.7 | 50.3 | 58.2 | 56.7 |
| | Collapse angle [°] | 44.1 | 32.3 | 37.5 | 51 | 45.7 |
| | Angle difference [°] | 4.8 | 10.4 | 12.8 | 7.2 | 11 |
| | Avalanche energy [mJ/kg] | 59.5 | 17 | 93 | 41.27 | 45 |
| | Avalanche angle [°] | 79.6 | 50 | 79.5 | 74 | 74 |
| | Surface fractal | 7.5 | 3.92 | 3.65 | 5.59 | 6.28 |
| Evaluation | Solubility | B | A | A | A | A |
| | V₀ [mL] | 460 | 300 | 400 | 355 | 310 |
| | Increment | 2.32 times | 1.52 times | 2.02 times | 1.79 times | 1.57 times |

In the granulated powder of Example 1, foaming in mixing with water was suppressed as compared with the non-granulated WPC and the granulated powder of Comparative Example 1. The solubility in water was also better.

## Claims

1. A method for producing a granulated powder comprising spraying a binder liquid on a whey protein concentrate to perform granulation, and producing a granulated powder,
wherein the binder liquid containing a whey-derived lipid.

2. The method for producing a granulated powder according to claim 1, wherein the whey-derived lipid is a cheese whey-derived lipid.

3. The method for producing a granulated powder according to claim 1 or 2, wherein the binder liquid contains a microfiltration retentate or an ultrafiltration retentate of a whey.

4. The method for producing a granulated powder according to any one of claims 1 to 3, wherein the binder liquid contains a microfiltration retentate of a whey.

5. The method for producing a granulated powder according to claim 4, wherein the microfiltration retentate is produced in production of a whey protein isolate.

6. The method for producing a granulated powder according to any one of claims 1 to 5, wherein the binder liquid contains no additive.

7. A granulated powder of a whey protein concentrate comprising a whey protein and a lipid,
wherein a content of the lipid based on the total mass of the granulated powder is 0.5% by mass or more and less than 10% by mass, and
a volume-based cumulative 50% diameter is 60 µm or more.

8. The granulated powder according to claim 7, wherein a content of the whey protein based on the total mass of the granulated powder is 50 to 95% by mass.

9. The granulated powder according to claim 7 or 8, which contains no additive.

10. The granulated powder according to any one of claims 7 to 9, which has an avalanche angle of 40 to 60°.

11. The granulated powder according to any one of claims 7 to 10, which has an avalanche energy of 10 to 50 mJ/kg.

12. The granulated powder according to any one of claims 7 to 11, which has an increment in volume in an evaluation of foaming of 3 times or less.
